# EUROPEAN PATENT APPLICATION

(11) **EP 4 369 435 A1**
(43) Date of publication of application: **15.05.2024**
(21) Application number: 22837661.2
(22) Date of filing: 05.07.2022
(51) Int. Cl.: H01M 4/1391, H01M 4/525, H01M 4/62

(54) **COMPOSITION FOR FORMING ELECTRODE**

(30) Priority: 06.07.2021 JP 2021112215; 24.12.2021 JP 2021211257
(71) Applicant: Nissan Chemical Corporation, Tokyo 103-6119 (JP)
(72) Inventor: HATANAKA Tatsuya, Funabashi-shi, Chiba 274-0052 (JP); OKA Mari, Funabashi-shi, Chiba 274-0052 (JP)
(74) Representative: Mewburn Ellis LLP
(86) International application number: PCT/JP2022/026678
(87) International publication number: WO 2023/282246

(57) **Abstract**

Provided is a composition for forming an electrode with which battery characteristics can be maintained while the amount of a fluorine-based binder used is reduced, the composition including an organic compound, a fluorine-based binder, a conductive carbon material, and an active material, the organic compound having four or more acidic functional groups and/or salts thereof, the content thereof making up 0.001-0.5 mass% of the total solid content, and the fluorine-based binder content making up 0.01-1.0 mass% of the total solid content.

## Description

### TECHNICAL FIELD

The present invention relates to an electrode-forming composition.

### BACKGROUND ART

Lithium-ion secondary batteries, owing in part to their high energy density and high voltage and also to the fact that they lack a memory effect during charging and discharging, are currently the secondary batteries under most intensive development. With the growing application and usage of such batteries, even lower resistance, longer life, higher capacity, safety and lower cost are desired.

A drawback of lithium-ion secondary batteries is that they deteriorate with repeated charging and discharging. Various factors have been reported as mechanisms of such deterioration, chief among which are deterioration of the active material arising from traces of moisture remaining at the battery interior and decomposition of the electrolyte solution, an increase in the internal resistance due to the formation of electrolyte solution decomposition products, and isolation of the active material arising from cracks that have formed within the electrode composition layer (sometimes referred to below as the "electrode layer").

To overcome such problems, Non-Patent Document 1 reports covering the surface of the positive electrode active material with a Mg, Al, Ti, Sn, Si, Cu or other metal oxide, a phosphorus compound, carbon or the like. However, this approach is unable to fully resolve the problem of battery life deterioration and the problem of gas evolution due to electrolyte decomposition during charging and discharging.

Inorganic compounds such as alkali metal-containing transition metal oxides and transition metal chalcogens are known as positive electrode active materials for lithium ion secondary batteries capable of achieving a battery voltage of about 4 V. Of these, high-nickel positive electrode active materials such as LiₓNiO₂ have a high discharge capacity, making them attractive as a positive electrode material. However, high-nickel positive electrode active materials have large amounts of impurities present on their surface, including starting material residues, LiOH that forms due to proton exchange reactions with moisture, and Li₂CO₃ formed by the reaction of such LiOH with carbon dioxide in air.

In particular, because LiOH is an alkaline constituent, when a composition that includes a positive electrode active material, polyvinylidene fluoride (PVdF) as the binder, and N-methyl-2-pyrrolidone (NMP) as the solvent is intensively mixed, or when the mixed composition is coated onto a substrate in the positive electrode production step, gelation of the slurry arises. Alkaline constituents not only increase the resistance of the battery by corroding the aluminum generally used as the positive electrode current collecting foil, they also react with the electrolyte solution within the battery and are thus a major factor increasing battery resistance and shortening battery life. As for Li₂CO₃, this decomposes with charging and discharging of the battery, generating CO₂ gas and CO₃ gas, which gas constituents cause the pressure at the interior of the battery to rise, leading to battery swelling and worsening the cycle life. There is also a risk of the battery failing on account of a rise in the internal pressure due to the evolved gases.

To this end, Patent Document 1 reports a method which uses fluorine gas to treat the positive electrode active material and thereby fix remaining LiOH as LiF, thus preventing gelation and also suppressing gas evolution. However, fluorine gas is highly toxic and difficult to handle, in addition to which the LiF that forms as a by-product increases the internal resistance of the battery; the capacity decreases also on account of corrosion of the positive electrode active material by fluorine gas. In addition, residual fluorine reacts with trace amounts of moisture present in the active material and the electrode solution, forming hydrogen fluoride, which tends to cause cycle deterioration.

Patent Document 2 describes a method for removing unreacted lithium hydroxide and impurities from the starting materials by washing the positive electrode active material with a lithium salt-containing aqueous solution. However, drawbacks of this method are the environmental impact of the wastewater discharged during washing and the cost associated with treatment of the wastewater.

The battery must also have a sufficiently small resistance. When the resistance is large, a large voltage is required to input and output current, making charging and discharging difficult. The battery resistance includes a number of resistance components which are broadly divided into electronic resistance, ion diffusion resistance within a solution, ion diffusion resistance within particles and charge transfer resistance. Of these, electronic resistance can be relatively easily resolved by adding a carbon material, and ion diffusion resistance within particles can be resolved by making the particle size smaller and shortening the diffusion length. However, reducing the charge transfer resistance and the ion diffusion resistance within a solution is not easy.

In battery applications for electric vehicles and the like, efforts are being made to increase energy density while lowering costs by making the electrodes thicker and reducing the amount of current-collecting foil used. As the electrodes become thicker, the Li diffusion resistance associated with the phenomena of migration and diffusion due to the internal electric field within the electrode becomes charging/discharging reaction rate-determining, especially when a large current is passed through. As a result, the effective capacity decreases. Also, heterogeneous reactions are induced, accelerating deterioration. Hence, a reduction in the ion diffusion resistance within solutions is also strongly desired, and so efforts are being made to develop electrolyte solutions and additives with the aim of reducing Li diffusion resistance within an electrolyte solution. However, electrolyte solutions and additives having satisfactory properties in this regard have yet to be achieved.

Patent Document 3 reports that by using within an electrode or an electrolyte solution a compound having a lithium salt structure (-M⁻Li⁺) and a polymerizable group wherein -M⁻ is a group having a lithium ion coordination energy as determined by density functional theory calculation (B3LYP/6-31G(d)) that is from 100 to 1,500 kJ/mol, a lithium ion-coordinating polymer film forms at the surface of the active material and the desolvation energy that is the chief resistance component within charge transfer resistance is reduced. However, because a large amount of polyvinylidene fluoride is used within the electrode and the above-described compound also is added in a large amount, the Li diffusion resistance ends up being large, making it impossible to sufficiently lower the battery resistance.

Patent Document 4 increases the low-temperature characteristics of secondary batteries by, in a nonaqueous electrolyte solution for secondary batteries that includes a nonaqueous solvent and a lithium salt, controlling the proportion of ethylene carbonate within a mixed solvent of ethylene carbonate and acyclic carbonate that is included in the nonaqueous solvent and moreover by using an electrolyte solution to which has been added a compound that has a S-F bond on the molecule and is either a sulfonyl fluoride or a fluorosulfuric acid ester. The reason appears to be that holding down the content of the high-viscosity ethylene carbonate improves the ability of the electrolyte solution to permeate the electrode composition layer, enabling thorough diffusion of and penetration by the solution. However, lowering the amount of the highly polar ethylene carbonate leads to a decline in electrolyte dissociation, and so this approach is not necessarily desirable.

Non-Patent Document 2 (Journal of the Electrochemical Society, 165(5) A1027-A1037 (2018)) reports that the use of methyl acetate increases ionic conduction and improves the charge-discharge characteristics. However, battery deterioration accelerates, making it necessary to resort to complicated additive technology and high-cost active materials, a problem which has yet to be resolved.

Also, lower costs and reduced environmental impact are eagerly awaited in battery manufacture, and so there is a desire for materials that are inexpensive and free of supply instability to be used, for materials which have a small processing load to be used, or for the amount of use to be reduced.

### PRIOR ART DOCUMENTS

### PATENT DOCUMENTS

Patent Document 1: JP-A 2006-286240
Patent Document 2: WO 2017/034001 A1
Patent Document 3: WO 2013/002186 A1
Patent Document 4: JP-A 2019-117811

### NON-PATENT DOCUMENTS

Non-Patent Document 1: Journal of Alloys and Compounds 706 (2017), 24-40
Non-Patent Document 2: Journal of the Electrochemical Society, 165(5) A1027-A1037 (2018)

### SUMMARY OF INVENTION

### TECHNICAL PROBLEM

In light of these circumstances, investigations on the formulation of electrode-forming compositions were carried out with the object of lowering the above-described resistance. In the course of these investigations, it was discovered that an electrode having a low charge transfer resistance and a high ion diffusibility can be produced by using a specific organic compound having acidic functional groups in combination with a small amount of fluorinated binder. The object of the invention is thus to provide an electrode-forming composition which can improve the battery characteristics while lowering the amount of fluorinated binder employed.

### SOLUTION TO PROBLEM

As a result of repeated and intensive investigations aimed at achieving the above object, the inventors have discovered that, in an electrode-forming composition which includes an organic compound, a fluorinated binder, a conductive carbon material and an active material, by using as the organic compound a specific amount of an organic compound having four or more acidic functional groups and/or salts thereof, the diffusion resistance of Li and other metallic ions can be lowered and the battery characteristics maintained while reducing the amount of fluorinated binder employed. This discovery ultimately led to the present invention.

Accordingly, the invention provides the following electrode-forming composition.
1. An electrode-forming composition comprising an organic compound, a fluorinated binder, a conductive carbon material and an active material,
   wherein the organic compound has four or more acidic functional groups and/or salts thereof and is included in an amount of from 0.001 to 0.5 wt% of total solids in the composition, and
   the fluorinated binder is included in an amount of from 0.01 to 1.0 wt% of the total solids.
2. The electrode-forming composition according to 1 above, wherein the included amount of the fluorinated binder is from 0.05 to 0.6 wt% of the total solids.
3. The electrode-forming composition according to 1 or 2 above, wherein the included amount of the organic compound is from 0.001 to 0.3 wt% of the total solids.
4. The electrode-forming composition according to any of 1 to 3 above, wherein the organic compound has five or more acidic functional groups and/or salts thereof.
5. The electrode-forming composition according to any of 1 to 4 above, wherein the acidic functional groups and salts thereof are of at least one type selected from the group consisting of carboxylic acid groups, phosphoric acid groups, sulfonic acid groups and salts thereof.
6. The electrode-forming composition according to 5 above, wherein the acidic functional groups and salts thereof are a carboxylic acid groups and/or salts thereof.
7. The electrode-forming composition according to any of 1 to 6 above, wherein the organic compound is a polymer.
8. The electrode-forming composition according to 7 above, wherein the organic compound has a weight-average molecular weight of from 250 to 2,000,000.
9. The electrode-forming composition according to 7 or 8 above, wherein the organic compound is a copolymer comprising recurring units from a monomer having a group selected from the group consisting of aromatic rings and alkyl, amino, ether, nitrile, hydroxyl and carbonyl groups, and recurring units from a monomer having a carboxylic acid group and/or a salt thereof.
10. The electrode-forming composition according to 9 above, wherein the organic compound is a copolymer comprising recurring units from a monomer having a group selected from the group consisting of nitrile, hydroxyl and carbonyl groups, and recurring units from a monomer having a carboxylic acid group and/or a salt thereof.
11. The electrode-forming composition according to any of 1 to 10 above, further including a dispersant.
12. The electrode-forming composition according to 11 above, wherein the dispersant includes a nonionic polymer.
13. The electrode-forming composition according to 12 above, wherein the nonionic polymer is polyvinylpyrrolidone or a polymer having at least one type of group selected from the group consisting of nitrile, hydroxyl, carbonyl, amino, sulfonyl and ether groups.
14. The electrode-forming composition according to any of 11 to 13 above, wherein the combined amount of the organic compound and the dispersant is from 0.001 to 1 wt% of the total solids.
15. The electrode-forming composition according to any of 1 to 14 above, wherein the active material includes an oxide containing at least one element selected from Li, Ni and Fe, or includes S, and is a composition for a positive electrode.
16. An electrode which includes a current collecting substrate and an electrode mixture layer formed on at least one side of the current collecting substrate, wherein the electrode mixture layer is formed of the electrode-forming composition according to any of 1 to 15 above.
17. An energy storage device which includes the electrode according to 16 above.
18. The energy storage device according to 17 above which is an all-solid-state battery.

### ADVANTAGEOUS EFFECTS OF INVENTION

The electrode-forming composition of the invention can be suitably used to form an electrode for an energy storage device. Energy storage devices containing an electrode produced from this composition should exhibit certain advantages, these being a decrease in the Li and other metallic ion diffusion resistance (representing an improvement in the battery characteristics) and a lower cost due to a decrease in the amount of fluorinated binder used, a longer life on account of improved reaction uniformity, a lower environmental impact, and a reduction in the amount of solvent used as well as a shortened drying time owing to the increased solids content of the slurry. In addition, deterioration is likely to be suppressed by the alkaline constituent-neutralizing effect of adding an acidic functional group-containing organic compound.

Although the mechanism underlying the alkaline constituent-neutralizing effect is not entirely clear, it is thought that alkaline impurities are neutralized by the use of a specific organic compound having acidic functional groups as an electrode additive, and moreover that the carboxylic acid salts, etc. which form as a result of neutralization become insoluble in the electrode slurry and can thus be immobilized on the active material surface.

As for the metallic ion diffusion resistance, the amount of fluorinated binder that is typically used is on the order of several weight percent of the electrode, whereas in the present electrode where a specific organic compound having acidic functional groups is used as an electrode additive, the necessary amount can be lowered to 1 wt% or less, which presumably enables organic ingredients that impede the diffusion of Li and other metallic ions in the electrode to be significantly cut back.

The ability to greatly decrease the amount of fluorinated binder used also means that the costs associated with battery fabrication can be lowered and that the environmental impact of battery production can be reduced. An increase in battery recyclability and a longer life and improved safety are also anticipated.

### BRIEF DESCRIPTION OF DRAWINGS

[FIG. 1] FIG. 1 is an enlarged view of a portion of the NMR spectrum for the fluorinated binder Solef 5140.
[FIG. 2] FIG. 2 is an enlarged view of a portion of the NMR spectrum for the fluorinated binder Solef 5130.

### DESCRIPTION OF EMBODIMENTS

The electrode-forming composition of the invention includes an organic compound, a fluorinated binder, a conductive carbon material and an active material. The organic compound has four or more acidic functional groups and/or salts thereof, and is included in an amount of from 0.001 to 0.5 wt% of the total solids in the composition. The fluorinated binder is included in an amount of from 0.01 to 1.0 wt% of the total solids.

The organic compound has four or more acidic functional groups and/or salts thereof, and preferably has five or more acidic functional groups and/or salts thereof. From the standpoint of cost and availability, carboxylic acid groups, phosphoric acid groups and sulfonic acid groups are preferred as the acidic functional groups; carboxylic acid groups are more preferred. Salts of carboxylic acid groups, phosphoric acid groups and sulfonic acid groups are exemplified by sodium, potassium and other alkali metal salts; magnesium, calcium and other Group 2 metal salts; ammonium salts; propylamine, dimethylamine, triethylamine, ethylenediamine and other aliphatic amine salts; imidazoline, piperazine, morpholine and other alicyclic amine salts; aniline, diphenylamine and other aromatic amine salts; and pyridinium salts. From a similar standpoint as above, alkali metal salts are preferred, and lithium salts are more preferred. One of these acidic functional groups and salts thereof may be included alone or two or more may be included together.

The organic compound is preferably a polymer. Specific examples include polyacrylic acid, poly(itaconic acid), poly(maleic acid), poly(fumaric acid), polymethacrylic acid, poly(vinylsulfonic acid), poly(4-styrenesulfonic acid) and salts of these. Polyacrylic acid, poly(itaconic acid), poly(maleic acid) and salts of these are preferred.

The polymer may be a copolymer. Specific examples include copolymers containing recurring units from monomers having a group selected from the group consisting of aromatic rings, alkyl groups, amino groups, ether groups, nitrile groups, hydroxyl groups and carbonyl groups, and recurring units from monomers having a carboxylic acid group and/or a salt thereof. Copolymers containing recurring units from monomers having a group selected from the group consisting of nitrile groups, hydroxyl groups and carbonyl groups, and recurring units from a monomer having a carboxylic acid group and/or a salt thereof are preferred.

Exemplary aromatic rings include benzene, biphenyl, naphthalene, anthracene and phenanthrene rings.

The alkyl groups are preferably linear, branched or cyclic alkyl groups of 1 to 6 carbon atoms. Specific examples include methyl, ethyl, n-propyl, isopropyl, n-butyl, isobutyl, tert-butyl, n-pentyl, isopentyl, neopentyl, n-hexyl, cyclopentyl and cyclohexyl groups.

When the organic compound is a polymer, although the average molecular weight is not particularly limited, the polymer has a weight-average molecular weight (Mw) of preferably from 250 to 2,000,000, more preferably from 1,000 to 1,000,000, and even more preferably from 1,000 to 250,000. The Mw is a polystyrene equivalent value obtained by gel permeation chromatography (GPC).

The organic compound content is from 0.001 to 0.5 wt%, preferably from 0.001 to 0.3 wt%, and more preferably from 0.001 to 0.2 wt%, of the total solids. An even more preferable lower limit in the organic compound content is 0.01 wt% or more of the total solids. By setting the organic compound content within the above range, the amount in which the subsequently described fluorinated binder is used can be lowered, enabling the battery characteristics of the resulting battery to be maintained. In this invention, "solids" refers to ingredients other than the solvent that make up the composition (the same applies below).

The fluorinated binder is not particularly limited; use can be made of one that is suitably selected from among known materials. Specific examples include, but are not limited to, polyvinylidene fluoride (PVdF), polytetrafluoroethylene, and copolymers containing at least one monomer selected from the group consisting of vinylidene fluoride, tetrafluoroethylene and hexafluoropropylene. Or the fluorinated binder may be one that has been modified with polar functional groups such as carboxyl groups and hydroxyl groups. The polar functional groups can be confirmed by the presence or absence of distinct peaks detected within the range of 10 to 15 ppm in measurement with a nuclear magnetic resonance spectrometer (NMR) spectrometer.

The fluorinated binder content is from 0.01 to 1.0 wt%, preferably from 0.05 to 0.6 wt%, more preferably from 0.07 to 0.5 wt%, and even more preferably from 0.1 to 0.4 wt%, of the total solids. If the fluorinated binder content is too high, the composition may gel, becoming impossible to use.

The conductive carbon material is not particularly limited; use can be made of one that is suitably selected from among known conductive carbon materials such as carbon fibers, ketjen black, acetylene black (AB), carbon whiskers, carbon nanotubes (CNT), carbon fibers, natural graphite and synthetic graphite. From the standpoint of, for example, electrical conductivity, dispersibility and availability, AB and CNT are especially preferred.

Carbon nanotubes are generally produced by an arc discharge process, chemical vapor deposition (CVD), laser ablation or the like. The CNTs used in this invention may be obtained by any of these methods. CNTs are categorized as single-walled CNTs (SWCNTs) consisting of a single cylindrically rolled graphene sheet, double-walled CNTs (DWCNTs) consisting of two concentrically rolled graphene sheets, and multi-walled CNTs (MWCNTs) consisting of a plurality of concentrically rolled graphene sheets. SWCNTs, DWCNTs or MWCNTs may be used alone in the invention, or a plurality of these types of CNTs may be used in combination.

When SWCNTs, DWCNTs or MWCNTs are produced by the above methods, catalyst metals such as nickel, iron, cobalt and yttrium may remain in the product, and so purification to remove these impurities is sometimes necessary. Acid treatment with nitric acid, sulfuric acid or the like together with sonication is effective for removing impurities. However, in acid treatment with nitric acid, sulfuric acid or the like, there is a possibility of the π-conjugated system making up the CNTs being destroyed and the properties inherent to the CNTs being lost. Hence, it is desirable for the CNTs to be purified and used under suitable conditions.

Specific examples of CNTs that may be used in this invention include CNTs synthesized by the super growth method (available from the New Energy and Industrial Technology Development Organization (NEDO) in the National Research and Development Agency), eDIPS-CNTs (available from NEDO in the National Research and Development Agency), the SWNT series (available under this trade name from Meijo Nano Carbon), the VGCF series (available under this trade name from Showa Denko KK), the FloTube series (available under this trade name from CNano Technology), AMC (available under this trade name from Ube Industries, Ltd.), the NANOCYI, NC7000 series (available under this trade name from Nanocyl S.A.), Baytubes (available under this trade name from Bayer), GRAPHISTRENGTH (available under this trade name from Arkema), MWNT7 (available under this trade name from Hodogaya Chemical Co., Ltd.), Hyperion CNT (available under this trade name from Hyperion Catalysis International), the TC series (available under this trade name from Toda Kogyo Corporation), the FloTube series (available under this trade name from Jiangsu Cnano Technology) and LUCAN BT1003M (available under this trade name from LG Chem. Ltd.).

The content of the conductive carbon material, although not particularly limited, is preferably from 0.1 to 4.0 wt%, and more preferably from 0.5 to 3.0 wt%, of the total solids. A good electrical conductivity can be obtained by setting the conductive carbon material content within this range.

Any of the various types of active materials conventionally used in electrodes for secondary batteries and other energy storage devices may be employed as the active material, although an active material for positive electrodes can be preferably used in this invention. For example, in the case of lithium secondary batteries and lithium-ion secondary batteries, chalcogen compounds capable of adsorbing and releasing lithium ions, lithium ion-containing chalcogen compounds, polyanion compounds, elemental sulfur and sulfur compounds may be used as the positive electrode active material.

Illustrative examples of such chalcogen compounds capable of adsorbing and releasing lithium ions include FeS₂, TiS₂, MoS₂, V₂O₆, V₆0₁₃ and MnO₂.

Illustrative examples of lithium ion-containing chalcogen compounds include LiCₒO₂, LiMnO₂, LiMn₂O₄, LiMo₂O₄, LiV₃O₈, LiNiO₂, LiₓNi_{y}M_{1-y}O₂ (wherein M is one or more metal element selected from the group consisting of Co, Mn, Ti, Cr, V, Al, Sn, Pb and Zn; and the conditions 0.05 ≤ x ≤ 1.10 and 0.3 ≤ y ≤ 1.0 are satisfied) and LiₐNi_{(1-x-y)}CoₓM¹_{y}M²_{z}X_{w}O₂ (wherein M¹ is one or more element selected from the group consisting of Mn and Al; M² is one or more element selected from the group consisting of Zr, Ti, Mg, W and V; and the conditions 1.00 ≤ a ≤ 1.50, 0.00 ≤ x ≤ 0.50, 0 ≤ y ≤ 0.50, 0.000 <_ z ≤ 0.020 and 0.000 ≤ w ≤ 0.020 are satisfied).

An example of a polyanion compound is LiFePO₄.

Illustrative examples of sulfur compounds include Li₂S and rubeanic acid.

One of these active materials may be used alone or two or more may be used in combination.

In this invention, of the above positive electrode active materials, oxides containing lithium and at least one element selected from nickel and iron, and compounds containing sulfur are preferred, these being FeS₂, TiS₂, MoS₂, LiNiO₂, LiₓNi_{y}M_{i-y}O₂ (wherein M is one or more metal element selected from the group consisting of Co, Mn, Ti, Cr, V, Al, Sn, Pb and Zn; and the conditions 0.05 ≤ x ≤ 1.10 and 0.3 ≤ y ≤ 1.0 are satisfied) and LiₐNi_{(1-x-y)}CoₓM¹_{y}M²_{z}X_{w}O₂ (wherein M¹ is one or more element selected from the group consisting of Mn and Al; M² is one or more element selected from the group consisting of Zr, Ti, Mg, W and V; and the conditions 1.00 ≤ a ≤ 1.50, 0.00 ≤ x ≤ 0.50, 0 ≤ y ≤ 0.50, 0.000 ≤ z ≤ 0.020 and 0.000 ≤ w ≤ 0.020 are satisfied), LiFePO₄, Li₂S and rubeanic acid.

The active material content is preferably from 94.5 to 99.88 wt%, and more preferably from 95.0 to 99.0 wt%, of the total solids.

Aside from the fluorinated binder, the electrode-forming composition of the invention may also include another binder within a range that does not detract from the advantageous effects of the invention.

The other binder is not particularly limited, and may be suitably selected from among known materials and used. In this invention, a nonaqueous binder may be preferably used. Specific examples include polyimides, ethylene-propylene-diene ternary copolymers, styrene-butadiene rubbers, polyethylene and polypropylene. One of these may be used alone or two or more may be used in combination.

When another binder such as the above is included, the content thereof, although not particularly limited, is preferably 5.0 wt% or less, more preferably 3.0 wt% or less, and even more preferably 3.0 wt% or less, of the total solids. It is most preferable to not include another binder.

The electrode-forming composition of the invention may additionally include a dispersant in order to improve the dispersibility of the conductive carbon material and the active material. The dispersant may be suitably selected from compounds that are conventionally used as dispersants for conductive carbon materials such as CNTs, although including a nonionic polymer is preferable from the standpoint of stability at the interior of the battery. The nonionic polymer is exemplified by polyvinylpyrrolidone (PVP) and polymers having at least one type of group selected from the group consisting of nitrile, hydroxyl, carbonyl, amino, sulfonyl and ether groups. Specific examples of such polymers include polyvinyl alcohol, polyacrylonitrile, polylactic acid, polyester, polyimide, polyphenyl ether, polyphenyl sulfone, polyethyleneimine and polyaniline. A single dispersant may be used alone or two or more may be used in combination.

When such a dispersant is included, the content thereof, although not particularly limited, is preferably from 0.001 to 0.5 wt%, more preferably from 0.001 to 0.3 wt%, and even more preferably from 0.001 to 0.2 wt%, of the total solids. An even more preferable lower limit in the content of this dispersant is 0.01 wt% or more of the total solids.

Taking into account the degree of adhesion between the resulting electrode layer and the current collector, the combined amount of the organic compound and the dispersant is preferably from 0.001 to 1 wt%, and more preferably from 0.01 to 1 wt%, of the total solids.

A solvent may be used in preparing the electrode-forming composition.

Although not particularly limited, exemplary solvents include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and t-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; glycols such as ethylene glycol and propylene glycol; carbonates such as ethylene carbonate, propylene carbonate, dimethyl carbonate, diethyl carbonate and methyl ethyl carbonate; and also γ-butyrolactone, dimethylsulfoxide (DMSO), dioxolane and sulfolane. One of these solvents may be used alone or two or more may be used in combination.

In cases where the above-described fluorinated binder and, optionally, another binder are used, if necessary, they may be used after being dissolved or dispersed in these solvents.

Examples of preferred solvents in this case include water, NMP, DMSO, ethylene carbonate, propylene carbonate, dimethyl carbonate, diethyl carbonate, methyl ethyl carbonate, γ-butyrolactone, THF, dioxolane, sulfolane, DMF and DMAc. The solvent may be suitably selected according to the type of binder. In the case of a water-insoluble binder such as PVdF, NMP is suitable; in the case of a water-soluble binder, water is suitable.

The solids concentration of the inventive electrode-forming composition, which is suitably set while taking into account, for example, the coatability of the composition and the thickness of the thin film to be formed, is typically from about 50 wt% to about 90 wt%, preferably from about 55 wt% to about 85 wt%, and more preferably from about 60 wt% to about 80 wt%.

The electrode-forming composition of the invention can be obtained by mixing together the above-described ingredients at a predetermined temperature. When optional ingredients other than the additive and the active material of the invention are included, the additive and the active material may be mixed together with the optional ingredients or the additive and the active material may first be mixed together and the resulting mixture may then be mixed with the optional ingredients. With either of these methods, it is possible to cover the surface of the active material with the additive, enabling the advantageous effects of the invention to be fully manifested.

The electrode of the invention has, on at least one side of the substrate serving as the current collector, an electrode layer made of the above-described electrode-forming composition.

Exemplary methods of forming an electrode layer on a substrate include methods in which an electrode-forming composition prepared without using a solvent is shaped under applied pressure on a substrate (dry processes), and methods in which an electrode-forming composition is prepared using a solvent and the composition is then coated and dried on a substrate (wet processes). Various conventional known processes may be used without particular limitation as these processes. Examples of wet processes include printing processes such as offset printing and screen printing, and also blade coating, dip coating, spin coating, bar coating, slit coating, inkjet coating and die coating.

Drying may be carried out by air drying or drying under applied heat, although drying under applied heat is preferred from the standpoint of production efficiency. When drying under applied heat, the temperature is preferably between about 50°C and about 400°C, and more preferably between about 70°C and about 150°C.

Substrates that may be used in the electrode include metal substrates of, for example, platinum, gold, iron, stainless steel, copper, aluminum or lithium; alloy substrates obtained from any combination of these metals; oxide substrates such as indium tin oxide (ITO), indium zinc oxide (IZO) and antimony tin oxide (ATO); and carbon substrates such as glassy carbon, pyrolytic graphite and carbon felt. The substrate thickness in this invention, although not particularly limited, is preferably from 1 to 100 µm.

The thickness of the electrode layer is not particularly limited, but is preferably from about 0.01 µm to about 1,000 µm, and more preferably from about 5 µm to about 300 µm. When the electrode layer is used alone as the electrode, the film thickness is preferably set to 10 µm or more.

If necessary, the electrode may be pressed. The pressing method used may be one that is commonly employed, with mold pressing and roll pressing being especially preferred. The pressure applied during pressing, although not particularly limited, is preferably 1 kN/cm or more, more preferably 2 kN/cm or more, and even more preferably 5 kN/cm or more. The applied pressure has no particular upper limit, but is preferably not more than 50 kN/cm.

The secondary battery of the invention is one that includes the above-described electrode. More specifically, it is constructed of at least a pair of positive and negative electrodes, a separator situated between these electrodes, and an electrolyte, with the above-described electrode serving as at least one of the positive and negative electrodes. Other constituent members of battery devices may be suitably selected and used from among conventional known members.

The material used in the separator is exemplified by fiberglass, cellulose, porous polyolefin, polyamide and polyester.

The electrolyte may be either a liquid or a solid, and may be either aqueous or nonaqueous. From the standpoint of being able to easily exhibit a satisfactory practical performance, preferred use can be made of an electrolyte solution composed of, for example, an electrolyte salt and a solvent.

Examples of the electrolyte salt include lithium salts such as LiPF₆, LiBF₄, LiN(SO₂F)₂, LiN(C₂F₅SO₂)₂, LiAsF₆, LiSbF₆, LiAlF₄, LiGaF₄, LiInF₄, LiCIO₄, LiN(CF₃SO₂)₂, LiCF₃SO₃, LiSiF₆, LiN(CF₃SO₂) and (C₄F₉SO₂); metal iodides such as LiI, NaI, KI, CsI and CaI₂; iodide salts of quaternary imidazolinium compounds; iodide salts and perchlorate salts of tetraalkylammonium compounds; and metal bromides such as LiBr, NaBr, KBr, CsBr and CaBr₂. One of these electrolyte salts may be used alone or two or more may be used in combination.

The solvent used in the electrolyte solution is not particularly limited, provided that it is one which does not cause the substances making up the battery to corrode or decompose, leading to a deterioration in performance, and which dissolves the electrolyte salt. For example, nonaqueous solvents that may be used include cyclic esters such as ethylene carbonate, propylene carbonate, butylene carbonate and γ-butyrolactone; ethers such as tetrahydrofuran and dimethoxyethane; acyclic esters such as methyl acetate, dimethyl carbonate, diethyl carbonate and ethyl methyl carbonate; and nitriles such as acetonitrile. One of these solvents may be used alone or two or more may be used in combination.

Solid inorganic electrolytes such as solid sulfide electrolytes and solid oxide electrolytes, and solid organic electrolytes such as polymer electrolytes may be suitably used as solid electrolytes. By using these solid electrolytes, it is possible to obtain an all-solid-state battery that does not use a liquid electrolyte.

Examples of the solid sulfide electrolytes include thiosilicon-based materials such as Li₂S-SiS₂-lithium compounds (wherein the lithium compound is at least one selected from the group consisting of Li₃PO₄, LiI and Li₄SiO₄), Li₂S-P₂O₅, Li₂S-B₂S₅ and Li₂S-P₂S₅-GeS₂.

Examples of the solid oxide electrolytes include Li₅La₃M₂O₁₂ (M = Nb, Ta) and Li₇La₃Zr₂O₁₂, which are oxides having a garnet structure, oxoacid salt compounds based on a γ-Li₃PO₄ structure which are generically referred to as LISICONs, perovskite, Li_{3.3}PO_{3.8}N_{0.22} generically referred to as LIPONs, and sodium/alumina.

Examples of solid polymer electrolytes include polyethylene oxide materials and polymer compounds obtained by polymerizing or copolymerizing monomers such as hexafluoropropylene, tetrafluoroethylene, trifluoroethylene, ethylene, propylene, acrylonitrile, vinylidene chloride, acrylic acid, methacrylic acid, methyl acrylate, ethyl acrylate, methyl methacrylate, styrene and vinylidene fluoride. A supporting salt and a plasticizer may be included in these solid polymer electrolytes.

An example of the supporting salt included in the solid polymer electrolyte is lithium (fluorosulfonyl imide). An example of the plasticizer is succinonitrile.

Batteries manufactured using the electrode-forming composition of the invention contain less fluorinated binder than ordinary secondary batteries, yet have high battery characteristics.

The configuration of the secondary battery and the type of electrolyte are not particularly limited. Any battery configuration, such as a lithium-ion battery, nickel-hydrogen battery, manganese battery or air battery, may be used, although a lithium-ion battery is preferred. The lamination method and production method are not particularly limited.

When employed in a coin cell, the above-described electrode of the invention is typically die-cut in a predetermined disk shape and used. For example, a lithium-ion secondary battery may be produced by setting one electrode on a coin cell cap to which a washer and a spacer have been welded, laying an electrolyte solution-impregnated separator of the same shape on top thereof, laying the electrode of the invention on top of the separator with the electrode layer facing down, placing a coin cell case and gasket thereon, and sealing the assembly with a coin cell crimper.

### EXAMPLES

Examples and Comparative Examples are given below to more fully illustrate the invention, although the invention is not limited by these Examples. The apparatuses used were as follows.

### (1) Gel Permeation Chromatography (GPC) (estimation of weight-average molecular weight)

### (1-1) Fluorinated Binder

| | |
|---|---|
| Apparatus: | Prominence high-performance liquid chromatograph, from Shimadzu Corporation |
| Eluant: | 10 mM LiBr in NMP |
| Column: | KD-805, from Showa Denko K.K. |
| Column Temperature: | 40°C |
| Detector: | differential refractometer |
| Flow Rate: | 1 mL/min |
| Sample Concentration: | 0.1 wt% (20 µL injection) |

### [Measurement Method]

A dilute solution was prepared by dissolving 1 mg of fluoropolymer in 1 mL of N-methyl-2-pyrrolidone (NMP) containing 10 mM of dissolved LiBr. The resulting dilute solution was passed through a filter (made of polytetrafluoroethylene; pore size, 0.45 µm), giving a measurement sample. This measurement sample was supplied to the gel permeation chromatograph, GPC measurement was carried out under the above conditions and the polystyrene-equivalent molecular weight of the fluoropolymer was measured, based on which the weight-average molecular weight (Mw) was determined.

### (1-2) Other Synthetic Polymers

| | |
|---|---|
| Apparatus: | Prominence high-performance liquid chromatograph, from Shimadzu Corporation |
| Eluant: | 10 mM LiBr + 0.1% H₃PO₄ in NMP |
| Column: | KD-803, from Showa Denko K.K. |
| Column Temperature: | 40°C |
| Detector: | differential refractometer |
| Flow Rate: | 1 mL/min |
| Sample Concentration: | 0.1 wt% (10 µL injection) |

### [Measurement Method]

A dilute solution was prepared by dissolving, to a concentration of 1 wt%, the synthetic polymer in N-methyl-2-pyrrolidone (NMP) containing 10 mM of dissolved LiBr and 0.1 wt% of dissolved H₃PO₄. The resulting dilute solution was passed through a filter (made of polytetrafluoroethylene; pore size, 0.45 µm), giving a measurement sample. This measurement sample was supplied to the gel permeation chromatograph, GPC measurement was carried out under the above conditions and the polystyrene-equivalent molecular weight of the synthetic polymer was measured, based on which the weight-average molecular weight (Mw) was determined.

### (2) Nuclear Magnetic Resonance (NMR) Spectrometer (confirmation of polar functional groups)

| | |
|---|---|
| Apparatus: | Bruker AVANCE III HD (spectrometer) |
| | Bruker Ascend 500 (magnet) |
| Solvent: | deuterated DMSO (Kanto Chemical Co.) |
| Integration Ranges: | 3.20 to 2.70 ppm (integrated values normalized to 100) |
| | 2.45 to 2.10 ppm |
| | 12.70 to 12.40 ppm |
| Relaxation Delay: | 1 second |
| Number of runs: | 16 |

### [Measurement Method]

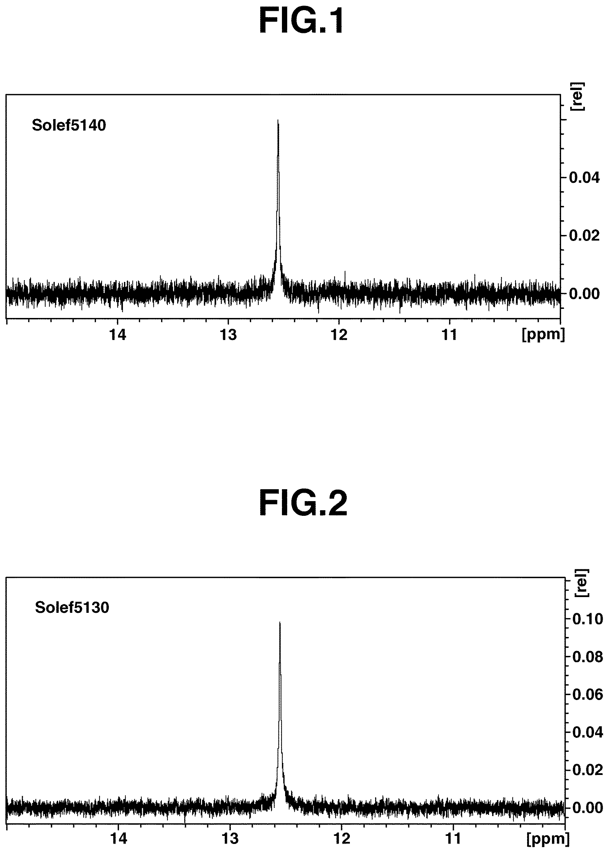

A minimal amount of fluorinated binder was dissolved in deuterated DMSO and NMR measurement was carried out. The presence or absence of polar functional groups was determined from the presence or absence of clear peaks detected at 10 to 15 ppm. The results are shown in FIGS. 1 and 2.

(3) Homogenizing disperser (mixture of electrode slurry)
   T.K. Robomix (homogenizing disperser model 2.5 (32 mm dia.)) from Primix Corporation
(4) Thin-film spin-type high-speed mixer (mixture of polar slurry)
   Filmix model 40, from Primix Corporation
(5) Roll press (compression of electrode)
   SA-602, from Takumi Giken
(6) Dry booth
   From Nihon Spindle Manufacturing Co., Ltd.
(7) Charge/discharge measurement system
   TOSCAT-3100, from Toyo System Co., Ltd.
   Temperature: room temperature

The starting materials and other reagents used were as follows.

| | |
|---|---|
| NCM811: | lithium nickel manganese cobaltate (LiNi_{0.8}Co_{0.1}Mn_{0.1}O₂), available as "S-800" from Ningbo Ronbay New Energy Technology Co., Ltd. |
| Solef 5140: | modified PVdF having Mw of 1,033,408 (measured value) and containing polar functional groups, from Solvay |
| Solef 5130: | modified PVdF having Mw of 729,202 (measured value) and containing polar functional groups, from Solvay |
| KF7300: | PVdF having Mw of 1,215,827 (measured value) and containing no polar functional groups, from Kuraray Co., Ltd. |
| Kynar HSV1810: | PVdF, from Arkema K.K. |
| AB: | Denka Black (acetylene black, from Denka Co., Ltd.) |
| CNT1: | FloTube 6120, from Jiangsu Cnano Technology Co., Ltd. |
| CNT2: | LUCAN BT1003, from LG Chemical |
| PAA1: | polyacrylic acid (Mw, 5,000), from Fujifilm Wako Pure Chemical Corporation |
| PAA2: | polyacrylic acid (Mw, 1,800), from Fujifilm Wako Pure Chemical Corporation |
| PAA3: | polyacrylic acid (Mw, 25,000), from Fujifilm Wako Pure Chemical Corporation |
| PAA4: | polyacrylic acid (Mw, 250,000), from Fujifilm Wako Pure Chemical Corporation |
| AC-10P: | polyacrylic acid (Mw, 5,000), from Toagosei Co., Ltd. |
| PAA-Li: | polyacrylic acid (50% Li-neutralized product of PAA1), synthesized product |
| PVPA: | poly(vinylphosphonic acid) (Mw, 24,817 (manufacturer's measured value)), from Aldrich Co. |
| PSSA: | poly(4-styrenesulfonic acid) solution (18 wt% in H₂O) from Aldrich; Mw, approx. 75,000 |
| AA/AN-8: | acrylic acid/acetonitrile copolymer; Mw, 15,724 (measured value); synthesized product |
| AA/IA-11: | acrylic acid/itaconic acid copolymer; Mw, 13,983 (measured value); synthesized product |
| AA/IA-12: | acrylic acid/itaconic acid copolymer; Mw, 14,288 (measured value); synthesized product |
| AA/IA-13: | acrylic acid/itaconic acid copolymer; Mw, 12,616 (measured value); synthesized product |
| IA: | itaconic acid, from Tokyo Chemical Industry Co., Ltd. |
| PIA: | poly(itaconic acid); Mw, 2,387 (measured value); synthesized product |
| Citric acid: | from Fujifilm Wako Pure Chemical Corporation |
| PVP1: | polyvinyl pyrrolidone; Mw, 1,200,000; from DKS Co., Ltd. |
| PVP2: | polyvinyl pyrrolidone; Mw, 10,000; from DKS Co., Ltd. |
| PVA: | polyvinyl alcohol; Mw, 61,000; from Sigma-Aldrich Co. |
| PAN: | polyacrylonitrile; Mw, 150,000; from Sigma-Aldrich Co. |
| H-PAN: | polyacrylonitrile; Mw, 200,000; from Dolan GmbH |
| Phosphorous acid: | from Junsei Chemical Co., Ltd. |
| NMP: | N-methyl-2-pyrrolidone, from Junsei Chemical Co., Ltd. |
| NMP (GPC grade): | N-methyl-2-pyrrolidone, from Fujifilm Wako Pure Chemical Corporation |
| Dehydrated NMP: | N-methyl-2-pyrrolidone; water content, ≤50 ppm; from Kanto Chemical Co. |

### [2] Synthesis of Acidic Functional Group-Containing Organic Compound

### [Preparation Example 1] Synthesis of Poly(itaconic acid) (PIA)

Sodium hypophosphite monohydrate (Fujifilm Wako Pure Chemical Corporation), 0.424 g (4 mmol), and 0.15 g (1 mmol) of potassium persulfate were added to 17.89 g of pure water, and the temperature was raised to 105°C. To this was added 1.3 g (10 mmol) of itaconic acid monomer (Tokyo Chemical Industry Co., Ltd.) and 1.19 g of pure water, such addition being carried out a total of five times at 10-minute intervals, and the system was refluxed under stirring for 2 hours. The solvent was removed from the reaction mixture by vacuum distillation. One gram of the resulting dry solid matter was dissolved in 5 g of DMSO, re-precipitated in acetone, and the precipitate was collected by filtration and recovered as poly(itaconic acid). The resulting polymer had a Mw of 2,387.

### [Preparation Example 2] Synthesis of Lithium Polyacrylate (50% neutralized product) (PAA-Li)

Polyacrylic acid (Mw, 5,000; Fujifilm Wako Pure Chemical Corporation) (PAA1), 3.5 g, was dissolved in 31.5 g of pure water. To this was added a solution of 0.6 g (25 mmol) of anhydrous LiOH (Kishida Chemical Co., Ltd.) dissolved in 5.4 g of pure water. The resulting reaction mixture was left at rest for 3 days at room temperature, following which 34.2 g of NMP was added to 20 g of this reaction mixture. Water was removed by vacuum distillation, giving an NMP solution of lithium polyacrylate (50% neutralized product).

### [Preparation Example 3] Synthesis of AA/AN Copolymer 8

Potassium persulfate, 0.051 g (0.333 mmol), 0.452 g of acrylonitrile monomer and 1.805 g of acrylic acid monomer were added to 25.63 g of pure water, the temperature was raised to 100°C and the system was refluxed under stirring. After 10 minutes, 0.051 g (0.333 mol) of potassium persulfate, 0.440 g of acrylonitrile monomer and 1.82 g of acrylic acid monomer were added and the system was refluxed under stirring at 100°C. After another 10 minutes, 0.051 g (0.333 mmol) of potassium persulfate, 0.440 g of acrylonitrile monomer and 1.84 g of acrylic acid monomer were added. Next, the system was refluxed under stirring at 100°C for 5 hours, following which the reaction mixture was poured into 200 g of acetone, effecting re-precipitation, and the system was left at rest overnight at room temperature. The supernatant was decanted off and the remaining viscous matter was washed with acetone. The resulting viscous matter was re-dissolved in 50 g of pure water and residual acetone was removed by vacuum distillation, following which the target product, AA/AN Polymer 8, was obtained by freeze drying. The Mw of the resulting polymer was 15,724.

### [Preparation Example 4] Synthesis of AA/IA Copolymer 11

Potassium persulfate (0.052 g), 0.434 g of itaconic acid monomer, 2.178 g of acrylic acid monomer and 0.48 g of sodium hypophosphite monohydrate were added to 28.10 g of pure water, the temperature was raised to 90°C and the system was refluxed under stirring. After 10 minutes, 0.051 g (0.333 mol) of potassium persulfate, 0.434 g of itaconic acid and 2.155 g of acrylic acid monomer were added and the system was refluxed under stirring for 90 minutes. After another 10 minutes, 0.051 g (0.333 mmol) of potassium persulfate, 0.434 g of itaconic acid monomer and 2.162 g of acrylic acid monomer were added. Next, the system was refluxed under stirring at 90°C for 5 hours, following which the reaction mixture was poured into 200 g of acetone. However, as the reaction mixture was being added, the precipitate that formed re-dissolved. Because of this, the reaction mixture was concentrated by vacuum distillation, again poured into 200 g of acetone, effecting re-precipitation, and the system was left at rest overnight at room temperature. The supernatant was decanted off and the remaining viscous matter was washed with acetone. The resulting viscous matter was re-dissolved in 100 g of pure water and residual acetone was removed by vacuum distillation, following which the target product, AA/IA Polymer 11, was obtained by freeze drying. The Mw of the resulting polymer was 13,983.

### [Preparation Example 5] Synthesis of AA/IA Copolymer 12

Potassium persulfate (0.051 g), 0.867 g of itaconic acid monomer, 1.927 g of acrylic acid monomer and 0.48 g of sodium hypophosphite monohydrate were added to 30.02 g of pure water, the temperature was raised to 90°C and the system was refluxed under stirring. After 10 minutes, 0.051 g (0.333 mol) of potassium persulfate, 0.867 g of itaconic acid monomer and 1.940 g of acrylic acid monomer were added and the system was refluxed under stirring at 90°C. After another 10 minutes, 0.051 g (0.333 mmol) of potassium persulfate, 0.867 g of itaconic acid monomer and 1.926 g of acrylic acid monomer were added. Next, the system was refluxed under stirring at 90°C for 5 hours, following which the reaction mixture was concentrated by vacuum distillation. This reaction mixture was poured into 300 g of acetone, effecting re-precipitation, and the system was left at rest overnight at room temperature. The supernatant was decanted off and the remaining viscous matter was washed with acetone. The resulting viscous matter was re-dissolved in 100 g of pure water and residual acetone was removed by vacuum distillation, following which the target product, AA/IA Polymer 12, was obtained by freeze drying. The Mw of the resulting polymer was 14,288.

### [Preparation Example 6] Synthesis of AA/IA Copolymer 13

Potassium persulfate (0.051 g), 1.302 g of itaconic acid monomer, 1.683 g of acrylic acid monomer and 0.48 g of sodium hypophosphite monohydrate were added to 31.92 g of pure water, the temperature was raised to 90°C and the system was refluxed under stirring. After 10 minutes, 0.051 g (0.333 mol) of potassium persulfate, 1,302 g of itaconic acid monomer and 1.684 g of acrylic acid monomer were added and the system was refluxed under stirring at 90°C. After another 10 minutes, 0.051 g (0.333 mmol) of potassium persulfate, 1.301 g of itaconic acid monomer and 1.682 g of acrylic acid monomer were added. Next, the system was refluxed under stirring at 90°C for 5 hours, following which the reaction mixture was concentrated by vacuum distillation. This reaction mixture was poured into 200 g of acetone, effecting re-precipitation, and the system was left at rest overnight at room temperature. The supernatant was decanted off and the remaining viscous matter was washed with acetone. The resulting viscous matter was re-dissolved in 100 g of pure water and residual acetone was removed by vacuum distillation, following which the target product, AA/IA Polymer 13, was obtained by freeze drying. The Mw of the resulting polymer was 12,616.

### [Preparation Example 7] Poly(4-Styrenesulfonic Acid)

A poly(4-styrenesulfonic acid) solution was freeze dried and the resulting solid matter, poly(4-styrenesulfonic acid), was used.

### [3] Preparation of Positive Electrode Composition (Electrode Slurry)

### [Examples 1-1 to 1-38, Comparative Examples 1-1 to 1-18]

Based on the formulations shown in Tables 1 to 3, an active material, a fluorinated binder, a conductive carbon material, an organic compound, a dispersant and a solvent were mixed together in a dry booth. An electrode slurry was produced by mixing these ingredients together in a homogenizing disperser at 8,000 rpm for 1 minute, and then twice carrying out 30 seconds of mixing treatment at a peripheral speed of 20 m/s using a thin-film spin-type high-speed mixer. The properties and coatability of the resulting electrode slurry were evaluated by the following methods. The results are presented collectively in the tables.

### [Properties of Electrode Slurry]

The appearance and flowability of the slurry at room temperature were checked and rated based on the following criteria.

### <<Rating Criteria>>

| | |
|---|---|
| ○: | Viscosity is appropriate, making the slurry suitable for electrode formation |
| × (gelled): | Gelling of the composition occurred and so the slurry cannot be used in electrode formation |

### [Electrode Slurry Coatability]

The electrode slurry was uniformly applied onto aluminum foil (15 µm thickness, from UACJ Corporation) using a doctor blade and dried at 80°C for 30 minutes, forming a coat. The condition of the formed coat was visually checked and rated based the criteria below. In the case of electrode slurries that gelled, normal application onto aluminum foil was difficult and so evaluation could not be carried out.

### <<Rating Criteria>>

○: A uniform coat formed
×: Severe coating unevenness arose

**[Table 1]**

| | Formulation | | | | | | Slurry properties | Coatability |
|---|---|---|---|---|---|---|---|---|
| | Solids (wt%) | | | | | Solvent (wt%)*¹ | | |
| | Active material | Fluorinated binder | Conductive carbon material | Organic compound | Dispersant | | | |
| Example 1-1 | NCM811 (97.65) | Solef 5140 (0.3) | AB (2) | PAA1 (0.05) | - | Dehydrated NMP (42.86) | ○ | ○ |
| Example 1-2 | NCM811 (97.6) | Solef 5140 (0.3) | AB (2) | PAA1 (0.05) | PAN (0.05) | Dehydrated NMP (42.86) | ○ | ○ |
| Example 1-3 | NCM811 (97.6) | Solef 5130 (0.3) | AB (2) | PAA1 (0.05) | PVA (0.05) | Dehydrated NMP (42.86) | ○ | ○ |
| Example 1-4 | NCM811 (98.6) | Solef 5140 (0.3) | AB (2) | PAA1 (0.1) | - | Dehydrated NMP (42.86) | ○ | ○ |
| Example 1-5 | NCM811 (97.4) | Solef 5140 (0.5) | AB (2) | PAA1 (0.1) | - | Dehydrated NMP (42.86) | ○ | ○ |
| Example 1-6 | NCM811 (97.5) | Solef 5140 (0.3) | AB (2) | PAA1 (0.1) | PAN (0.1) | Dehydrated NMP (42.86) | ○ | ○ |
| Example 1-7 | NCM811 (98.6) | Solef 5140 (0.3) | AB (1) | PAA1 (0.1) | - | Dehydrated NMP (42.86) | ○ | ○ |
| Example 1-8 | NCM811 (97.6) | Solef 5140 (0.3) | AB(1) CNT1 (1) | PAA1 (0.1) | - | Dehydrated NMP (81.82) | ○ | ○ |
| Example 1-9 | NCM811 (97.6) | Solef 5140 (0.3) | AB (2) | PAA2 (0.1) | - | Dehydrated NMP (42.86) | ○ | ○ |
| Example 1-10 | NCM811 (97.6) | Solef 5140 (0.3) | AB (2) | PAA3 (0.1) | - | Dehydrated NMP (44.93) | ○ | ○ |
| Example 1-11 | NCM811 (97.6) | Solef 5140 (0.3) | AB (2) | PAA4 (0.1) | - | Dehydrated NMP (49.25) | ○ | ○ |
| Example 1-12 | NCM811 (97.7) | Solef 5140 (0.2) | AB (2) | PAA3 (0.1) | - | Dehydrated NMP (42.86) | ○ | ○ |
| Example 1-13 | NCM811 (97.6) | Solef 5140 (0.3) | AB (2) | PIA (0.1) | - | Dehydrated NMP (42.86) | ○ | ○ |
| Example 1-14 | NCM811 (97.6) | Solef 5140 (0.3) | AB (2) | PAA-Li (0.1) | - | Dehydrated NMP (42.86) | ○ | ○ |
| Example 1-15 | NCM811 (97.6) | Solef 5140 (0.3) | AB (2) | AA/AN-8 (0.1) | - | Dehydrated NMP (42.86) | ○ | ○ |
| Example 1-16 | NCM811 (97.6) | Solef 5140 (0.3) | AB (2) | AA/IA-11 (0.1) | - | Dehydrated NMP (42.86) | ○ | ○ |
| Example 1-17 | NCM811 (97.6) | Solef 5140 (0.3) | AB (2) | AA/IA-12 (0.1) | - | Dehydrated NMP (42.86) | ○ | ○ |
| Example 1-18 | NCM811 (97.6) | Solef 5140 (0.3) | AB (2) | AA/IA-13 (0.1) | - | Dehydrated NMP (42.86) | ○ | ○ |
| Example 1-19 | NCM811 (97.6) | Solef 5140 (0.3) | AB (2) | PVPA (0.1) | - | Dehydrated NMP (42.86) | ○ | ○ |
| Example 1-20 | NCM811 (97.6) | Solef 5140 (0.3) | AB (2) | PSSA (0.1) | - | Dehydrated NMP (42.86) | ○ | ○ |
| Example 1-21 | NCM811 (97.2) | Solef 5140 (0.3) | AB (2) | PAA1 (0.5) | - | Dehydrated NMP (42.86) | ○ | ○ |
| Example 1-22 | NCM811 (96.7) | Solef 5140 (0.3) | AB (2) | PAA1 (1) | - | Dehydrated NMP (42.86) | ○ | ○ |
| Example 1-23 | NCM811 (97.6) | Solef 5130 (0.3) | AB (2) | PAA1 (0.1) | - | Dehydrated NMP (42.86) | ○ | ○ |
| Example 1-24 | NCM811 (97.899) | Solef 5140 (0.5) | AB (1.5) | PAA1 (0.001) | PAN (0.1) | Dehydrated NMP (33.33) | ○ | ○ |
| Example 1-25 | NCM811 (97.895) | Solef 5140 (0.5) | AB (1.5) | PAA1 (0.005) | PAN (0.1) | Dehydrated NMP (33.33) | ○ | ○ |
| Example 1-26 | NCM811 (97.89) | Solef 5140 (0.5) | AB (1.5) | PAA1 (0.01) | PAN (0.1) | Dehydrated NMP (33.33) | ○ | ○ |
| Example 1-27 | NCM811 (98.095) | Solef 5140 (0.3) | AB (1.5) | PAA1 (0.005) | PAN (0.1) | Dehydrated NMP (33.33) | ○ | ○ |

| | | | | | | | | |
|---|---|---|---|---|---|---|---|---|
| *1 Indicates proportion within electrode-forming composition. | | | | | | | | |

**[Table 2]**

| | Formulation | | | | | | Slurry properties | Coatability |
|---|---|---|---|---|---|---|---|---|
| | Solids (wt%) | | | | | Solvent (wt%)*' | | |
| | Active material | Fluorinated binder | Conductive carbon material | Organic compound | Dispersant | | | |
| Example 1-28 | NCM811 (97.4) | Solef 5140 (0.45) | AB (2) | PAA1 (0.15) | - | Dehydrated NMP (53.85) | ○ | ○ |
| Example 1-29 | NCM811 (97.45) | Solef 5140 (0.45) | AB (2) | PAA1 (0.1) | - | Dehydrated NMP (47.06) | ○ | ○ |
| Example 1-30 | NCM811 (98.00) | Solef 5140 (0.3) | AB (1.5) | PAA1 (0.1) | PAN (0.1) | Dehydrated NMP (42.86) | ○ | ○ |
| Example 1-31 | NCM811 (97.73) | Solef 5140 (0.66) | AB (1.5) | AC-10P (0.01) | H-PAN (0.1) | Dehydrated NMP (28.21) | ○ | ○ |
| Example 1-32 | NCM811 (97.87) | Solef 5140 (0.5) | AB (1.5) | AC-10P (0.03) | H-PAN (0.1) | Dehydrated NMP (35.14) | ○ | ○ |
| Example 1-33 | NCM811 (98.05) | Solef 5140 (0.3) | AB (1.5) | AC-10P (0.05) | H-PAN (0.1) | Dehydrated NMP (42.86) | ○ | ○ |
| Example 1-34 | NCM811 (98.60) | Solef 5140 (0.3) | AB (0.8) CNT2 (0.2) | PAA1 (0.1) | - | Dehydrated NMP (40.85) | ○ | ○ |
| Example 1-35 | NCM811 (98.50) | Solef 5140 (0.3) | AB (0.5) CNT2 (0.5) | PAA1 (0.1) | PAN (0.1) | Dehydrated NMP (40.85) | ○ | ○ |
| Example 1-36 | NCM811 (98.60) | Solef 5140 (0.3) | AB (0.5) CNT2 (0.5) | PAA1 (0.1) | - | Dehydrated NMP (49.25) | ○ | ○ |
| Example 1-37 | NCM811 (97.50) | Solef 5140 (0.3) | AB(1) CNT2 (1) | PAA1 (0.1) | PAN (0.1) | Dehydrated NMP (66.67) | ○ | ○ |
| Example 1-38 | NCM811 (97.45) | Solef 5140 (0.3) | AB (2) | PAA1 (0.25) | - | Dehydrated NMP (42.86) | ○ | ○ |
| | | KF7300 (0.15) | | | | | | |

| | | | | | | | | |
|---|---|---|---|---|---|---|---|---|
| *1 Indicates proportion within electrode-forming composition. | | | | | | | | |

**[Table 3]**

| | Formulation | | | | | | Slurry properties | Coatability |
|---|---|---|---|---|---|---|---|---|
| | Solids (wt%)*¹ | | | | | Solvent (wt%)*¹ | | |
| | Active material | Fluorinated binder | Conductive carbon material | Organic compound | Dispersant | | | |
| Comparative Example 1-1 | NCM811 (97.6) | Solef 5140 (0.4) | AB (2) | - | - | Dehydrated NMP (42.86) | ○ | × |
| Comparative Example 1-2 | NCM811 (97.5) | Solef 5140 (0.5) | AB (2) | - | - | Dehydrated NMP (42.86) | ○ | × |
| Comparative Example 1-3 | NCM811 (97.6) | Solef 5140 (0.3) | AB (2) | IA (0.1) | - | Dehydrated NMP (42.86) | ○ | × |
| Comparative Example 1-4 | NCM811 (97.6) | Solef 5140 (0.3) | AB (2) | Citric acid (0.1) | - | Dehydrated NMP (42.86) | ○ | × |
| Comparative Example 1-5 | NCM811 (97.6) | Solef 5140 (2) | AB (2) | - | PVP1 (0.1) | Dehydrated NMP (42.86) | ○ | × |
| Comparative Example 1-6 | NCM811 (96.0) | Solef 5140 (2) | AB (2) | - | - | Dehydrated NMP (42.86) | ○ | ○ |
| Comparative Example 1-7 | NCM811 (95.9) | Solef 5140 (2) | AB (2) | PAA1 (0.1) | - | Dehydrated NMP (42.86) | × (gelled) | - |
| Comparative Example 1-8 | NCM811 (95.8) | Solef 5140 (2) | AB (2) | PAA1 (0.1) | PAN (0.1) | Dehydrated NMP (42.86) | × (gelled) | |
| Comparative Example 1-9 | NCM811 (95.9) | Solef 5140 (2) | AB (2) | PAA-Li (0.1) | - | Dehydrated NMP (42.86) | × (gelled) | |
| Comparative Example 1-10 | NCM811 (95.9) | Solef 5140 (2) | AB (2) | - | PVA (0.1) | Dehydrated NMP (42.86) | ○ | ○ |
| Comparative Example 1-11 | NCM811 (95.9) | Solef 5140 (2) | AB (2) | - | PVP2 (0.1) | Dehydrated NMP (42.86) | ○ | ○ |
| Comparative Example 1-12 | NCM811 (95.9) | Solef 5140 (2) | AB (2) | Phosphorous acid (0.1) | - | Dehydrated NMP (42.86) | ○ | ○ |
| Comparative Example 1-13 | NCM811 (96.8) | Solef 5140 (1.1) | AB (2) | PAA1 (0.1) | - | Dehydrated NMP (42.86) | × (gelled) | - |
| Comparative Example 1-14 | NCM811 (97.0) | - | AB (2) | PAA1 (1) | - | Dehydrated NMP (42.86) | ○ | × |
| Comparative Example 1-15 | NCM811 (97.9) | Solef 5140 (0.5) | AB (1.5) | - | PVP1 (0.1) | Dehydrated NMP (20.48) | ○ | ○ |
| Comparative Example 1-16 | NCM811 (97.9) | Solef 5140 (0.5) | AB (1.5) | - | H-PAN (0.1) | Dehydrated NMP (25) | ○ | ○ |
| Comparative Example 1-17 | NCM811 (97.9) | Kynar HSV1810 (0.5) | AB (1.5) | - | H-PAN (0.1) | Dehydrated NMP (25) | ○ | ○ |
| Comparative Example 1-18 | NCM811 (97.9) | KF7300 (0.5) | AB (1.5) | - | H-PAN (0.1) | Dehydrated NMP (25) | ○ | ○ |

| | | | | | | | | |
|---|---|---|---|---|---|---|---|---|
| *1 Indicates proportion within electrode-forming composition. | | | | | | | | |

### [4] Production of Positive Electrode

### [Examples 2-1 to 2-33, Comparative Examples 2-1 to 2-8]

The electrode slurries obtained in Examples 1-1 to 1-22 and 1-28 to 1-38, and in Comparative Examples 1-6, 1-10 to 1-12 and 1-15 to 1-18 for which electrode production was judged to be possible, were uniformly applied with a doctor blade onto aluminum foil (15 µm thickness, from UACJ Corporation) as the current collector and dried at 80°C for 30 minutes to form in each case an electrode layer. This layer was then compressed with a roll press, producing an electrode.

### [5] Battery Production and Evaluation of Battery Characteristics

### [Examples 3-1 to 3-33, Comparative Examples 3-1 to 3-8]

Four disk-shaped electrodes of 10 mm diameter were die-cut from the positive electrode obtained as described above, and the positive electrode layer weight (the value obtained by subtracting the weight of a disk obtained by die cutting an uncoated portion of the electrode to a 10 mm diameter from the weight of the die-cut electrode) and electrode layer thickness (the value obtained by subtracting the thickness of the substrate from the thickness of the die-cut electrode) were measured. The electrode disks were vacuum dried at 120°C for 15 hours and then transferred to a dry booth.

The negative electrode was obtained by die-cutting four disk-shaped electrodes of 13 mm diameter from an electrode plate (Hachiyama KK) made of synthetic graphite :
carboxymethyl cellulose (CMC) : styrene-butadiene copolymer (SBR) = 98 : 1 : 1 (weight ratio). The negative electrode layer weight (the value obtained by subtracting the weight of a disk obtained by die cutting an uncoated portion of the electrode to a 13 mm diameter from the weight of the die-cut electrode) and electrode layer thickness (the value obtained by subtracting the thickness of the substrate from the thickness of the die-cut electrode) were measured. The electrode disks were vacuum dried at 120°C for 15 hours and then transferred to a dry booth.

The negative electrode was set on a 2032 coin cell cap (Hohsen Corporation) to which a washer and a spacer had been welded, with the side of the electrode to be coated facing up, and one piece of separator (circular fiberglass filter paper GF/F, from WATT MANN Co., Ltd.) that had been impregnated with a mixture of 20 g of an electrolyte solution (1 M of the electrolyte lithium hexafluorophosphate dissolved in ethylene carbonate : diethyl carbonate = 1 : 1 (volume ratio); from Kishida Chemical Co., Ltd.) and 0.4 g of fluoroethylene carbonate (Kishida Chemical Co., Ltd.) and die-cut to a diameter of 16 mm was laid on the foil. A positive electrode was then placed on top with the active material-coated side facing down. A single drop of electrolyte solution was deposited thereon, after which a coin cell case to which a washer and a spacer had been welded and a gasket were placed on top, and the assembly was sealed with a coin cell crimper. The coin cell was then left at rest for 24 hours. In this way, four specimens of each type of lithium-ion secondary battery to be tested were produced.

### [Charge/Discharge Evaluation]

The characteristics of the resulting secondary batteries were evaluated. To evaluate the influence on the battery of additives in the positive electrode, charge-discharge tests were carried out in the following order --battery aging, load characteristics evaluation-- under the conditions shown in Table 4 using a charge-discharge measurement device. The results are presented in Table 5.

**[Table 4]**

| Step | 1 | 2 | 3 | 4 | | | | |
|---|---|---|---|---|---|---|---|---|
| | Aging | EIS measurement pretreatment | EIS measurement | Evaluation of rate characteristics | | | | |
| Charging conditions: CC (C rate) | 0.2 | 0.2 | | 0.2 | 0.2 | 0.2 | 0.2 | 0.2 |
| Discharging conditions: CC (C rate) | 0.2 | - | | 0.2 | 0.5 | 1 | 2 | 3 |
| Discharging conditions: CV (mAh) | - | - | | - | - | - | - | - |
| Number of cycles | 5 | 1 | | 2 | 2 | 2 | 2 | 2 |
| Initial and final conditions | 3 - 4.2 V | 2.5 h | | 3 - 4.4 V | | | | |

**[Table 5]**

| | Positive electrode | Electrode slurry | 3C Discharge test current value (mAh) | 3C Discharge capacity (mAh/g) |
|---|---|---|---|---|
| Example 3-1 | Example 2-1 | Example 1-1 | 10.04 | 77.48 |
| Example 3-2 | Example 2-2 | Example 1-2 | 10.20 | 76.25 |
| Example 3-3 | Example 2-3 | Example 1-3 | 10.06 | 70.69 |
| Example 3-4 | Example 2-4 | Example 1-4 | 10.42 | 74.81 |
| Example 3-5 | Example 2-5 | Example 1-5 | 10.40 | 68.77 |
| Example 3-6 | Example 2-6 | Example 1-6 | 10.21 | 77.23 |
| Example 3-7 | Example 2-7 | Example 1-7 | 10.45 | 68.72 |
| Example 3-8 | Example 2-8 | Example 1-8 | 10.27 | 77.33 |
| Example 3-9 | Example 2-9 | Example 1-9 | 10.42 | 70.46 |
| Example 3-10 | Example 2-10 | Example 1-10 | 10.27 | 68.76 |
| Example 3-11 | Example 2-11 | Example 1-11 | 10.31 | 68.02 |
| Example 3-12 | Example 2-12 | Example 1-12 | 10.23 | 72.57 |
| Example 3-13 | Example 2-13 | Example 1-13 | 9.87 | 76.98 |
| Example 3-14 | Example 2-14 | Example 1-14 | 10.28 | 69.22 |
| Example 3-15 | Example 2-15 | Example 1-15 | 10.32 | 76.36 |
| Example 3-16 | Example 2-16 | Example 1-16 | 9.94 | 75.95 |
| Example 3-17 | Example 2-17 | Example 1-17 | 10.13 | 76.37 |
| Example 3-18 | Example 2-18 | Example 1-18 | 9.88 | 75.80 |
| Example 3-19 | Example 2-19 | Example 1-19 | 10.32 | 71.90 |
| Example 3-20 | Example 2-20 | Example 1-20 | 10.18 | 72.88 |
| Example 3-21 | Example 2-21 | Example 1-21 | 10.49 | 68.18 |
| Example 3-22 | Example 2-22 | Example 1-22 | 10.34 | 71.51 |
| Example 3-23 | Example 2-23 | Example 1-28 | 10.10 | 74.22 |
| Example 3-24 | Example 2-24 | Example 1-29 | 10.27 | 72.29 |
| Example 3-25 | Example 2-25 | Example 1-30 | 10.10 | 70.54 |
| Example 3-26 | Example 2-26 | Example 1-31 | 10.17 | 71.56 |
| Example 3-27 | Example 2-27 | Example 1-32 | 10.10 | 73.05 |
| Example 3-28 | Example 2-28 | Example 1-33 | 10.19 | 73.19 |
| Example 3-29 | Example 2-29 | Example 1-34 | 10.39 | 72.74 |
| Example 3-30 | Example 2-30 | Example 1-35 | 10.33 | 71.86 |
| Example 3-31 | Example 2-31 | Example 1-36 | 10.29 | 71.72 |
| Example 3-32 | Example 2-32 | Example 1-37 | 10.15 | 80.02 |
| Example 3-33 | Example 2-33 | Example 1-38 | 10.10 | 79.74 |
| Comparative Example 3-1 | Comparative Example 2-1 | Comparative Example 1-6 | 10.19 | 56.68 |
| Comparative Example 3-2 | Comparative Example 2-2 | Comparative Example 1-10 | 10.27 | 65.50 |
| Comparative Example 3-3 | Comparative Example 2-3 | Comparative Example 1-11 | 10.04 | 63.53 |
| Comparative Example 3-4 | Comparative Example 2-4 | Comparative Example 1-12 | 10.24 | 56.67 |
| Comparative Example 3-5 | Comparative Example 2-5 | Comparative Example 1-15 | 10.44 | 57.94 |
| Comparative Example 3-6 | Comparative Example 2-6 | Comparative Example 1-16 | 10.47 | 58.57 |
| Comparative Example 3-7 | Comparative Example 2-7 | Comparative Example 1-17 | 10.41 | 51.87 |
| Comparative Example 3-8 | Comparative Example 2-8 | Comparative Example 1-18 | 10.00 | 58.54 |

As shown in Table 5, secondary batteries in which positive electrodes produced from electrode-forming compositions according to the invention were used had high battery characteristics even though the amount of fluorinated binder was low.

## Claims

1. An electrode-forming composition comprising an organic compound, a fluorinated binder, a conductive carbon material and an active material,
wherein the organic compound has four or more acidic functional groups and/or salts thereof and is included in an amount of from 0.001 to 0.5 wt% of total solids in the composition, and
the fluorinated binder is included in an amount of from 0.01 to 1.0 wt% of the total solids.

2. The electrode-forming composition of claim 1, wherein the included amount of the fluorinated binder is from 0.05 to 0.6 wt% of the total solids.

3. The electrode-forming composition of claim 1 or 2, wherein the included amount of the organic compound is from 0.001 to 0.3 wt% of the total solids.

4. The electrode-forming composition of any one of claims 1 to 3, wherein the organic compound has five or more acidic functional groups and/or salts thereof.

5. The electrode-forming composition of any one of claims 1 to 4, wherein the acidic functional groups and salts thereof are of at least one type selected from the group consisting of carboxylic acid groups, phosphoric acid groups, sulfonic acid groups and salts thereof.

6. The electrode-forming composition of claim 5, wherein the acidic functional groups and salts thereof are carboxylic acid groups and/or salts thereof.

7. The electrode-forming composition of any one of claims 1 to 6, wherein the organic compound is a polymer.

8. The electrode-forming composition of claim 7, wherein the organic compound has a weight-average molecular weight of from 250 to 2,000,000.

9. The electrode-forming composition of claim 7 or 8, wherein the organic compound is a copolymer comprising recurring units from a monomer having a group selected from the group consisting of aromatic rings and alkyl, amino, ether, nitrile, hydroxyl and carbonyl groups, and recurring units from a monomer having a carboxylic acid group and/or a salt thereof.

10. The electrode-forming composition of claim 9, wherein the organic compound is a copolymer comprising recurring units from a monomer having a group selected from the group consisting of nitrile, hydroxyl and carbonyl groups, and recurring units from a monomer having a carboxylic acid group and/or a salt thereof.

11. The electrode-forming composition of any one of claims 1 to 10, further comprising a dispersant.

12. The electrode-forming composition of claim 11, wherein the dispersant includes a nonionic polymer.

13. The electrode-forming composition of claim 12, wherein the nonionic polymer is polyvinylpyrrolidone or a polymer having at least one type of group selected from the group consisting of nitrile, hydroxyl, carbonyl, amino, sulfonyl and ether groups.

14. The electrode-forming composition of any one of claims 11 to 13, wherein the combined amount of the organic compound and the dispersant is from 0.001 to 1 wt% of the total solids.

15. The electrode-forming composition of any one of claims 1 to 14, wherein the active material includes an oxide containing at least one element selected from Li, Ni and Fe, or includes S, and is a composition for a positive electrode.

16. An electrode comprising a current collecting substrate and an electrode mixture layer formed on at least one side of the current collecting substrate, wherein the electrode mixture layer is formed of the electrode-forming composition of any one of claims 1 to 15.

17. An energy storage device comprising the electrode of claim 16.

18. The energy storage device of claim 17 which is an all-solid-state battery.
